(19) Europäisches Patentamt
European Patent Office
Office européen des brevets

(11) **EP 4 553 761 A1**

(12) **EUROPEAN PATENT APPLICATION**

(43) Date of publication:
**14.05.2025 Bulletin 2025/20**

(21) Application number: **23208457.4**

(22) Date of filing: **08.11.2023**

(51) International Patent Classification (IPC):
**G06T 7/00** (2017.01)     **G06T 7/11** (2017.01)

(52) Cooperative Patent Classification (CPC):
**G06T 7/0012; G06T 7/11;** G06T 2207/10081;
G06T 2207/20081; G06T 2207/20084;
G06T 2207/30048; G06T 2207/30101

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Future Processing S.A.**
**44-100 Gliwice (PL)**

(72) Inventors:
• **BUJNY, Mariusz**
**43-190 Mikolow (PL)**
• **GOSLINSKI, Jaroslaw**
**61-488 Poznan (PL)**
• **MISZALSKI-JAMKA, Karol**
**31-158 Krakow (PL)**
• **KOSTUR, Marcin**
**40-748 Katowice (PL)**

(74) Representative: **Marek, Joanna**
**ul. Wodzislawska 14**
**44-200 Rybnik (PL)**

(54) **A METHOD OF CALCULATING AN AORTIC VALVE CALCIUM SCORE**

(57)     The object of invention is a method for calculating an aortic valve calcium score, characterized in that the method comprises: acquiring a non-contrast CT scan of a human chest, precisely identifying the shape and location of the Complete Aortic Root included in the scan by using an artificial neural network, calculating aortic valve calcium score based on the identified Complete Aortic Root, wherein the artificial neural network is trained using a training set generated by aligning a pre-acquired image of aortic root based on contrast CT and a pre-acquired CT image without contrast enhancement.

Fig. 1

**Description**

**FIELD OF THE INVENTION**

The invention belongs to the field of medical imaging, in particular automatic assessment of the calcifications of the aortic valve based on segmentation of computed tomography (CT) scans using deep neural networks.

**BACKGROUND OF THE INVENTION**

The aortic valve calcium score is an important indicator of a heart disease which may lead to Sudden Cardiac Death (SCD). The available methods for calcium scoring can be classified into the two following groups:

- End-to-end methods based on deep neural networks trained on manually labelled aortic plaques.
- Methods based on segmentation of aorta and subsequent identification of calcifications.

The first group of methods suffers from limited explainability and, in general, such models have to learn the anatomy of the aortic root based exclusively on the information about the plaques in the aortic valve. Such approaches have significantly lower accuracy than the methods applying thresholding together with ML-based organ segmentation.
The approaches in the second group use either registration techniques or classical segmentation methods (e.g. region growth) to first segment the aorta, and then identify the calcifications of the aortic valve. This is a promising approach since it offers much better explainability and has the potential to reach higher plaque segmentation accuracy provided that the segmentation of the aortic root is precise. However, the available approaches are able to provide only coarse estimate of the shape and location of the aortic root due to the fact that it is not visible in the non-contrast CT. Hence, the calcifications of the aortic valve cannot be precisely identified based on this information.
There are known an automatic methods for calcium score estimation in aorta from the state of art.
An automated method which measures coronary calcium in a living subject using x-ray CT is known form the US patent application US2003176780 (A1). The method acquires at least one CT image containing voxels representing x-ray attenuation of the subject which may or may not be calibrated. The method of analysis may or may not require operator interactions and includes analyzing the images in a computer to identify the boundaries of the heart. The method further includes identifying the approximate location of at least one coronary artery without operator interaction. The method further includes placing a region-of-interest (ROI) surrounding the artery location automatically. The method further includes analyzing the ROI to identify voxels above a threshold value. The method further includes determining the calcium content in mass units.
In the US patent application US2008279435 (A1) a method which automatically scores calcium in the aorta and other arteries of the body is disclosed. The method uses calcium plaque definitions that include subject specific in vivo blood/muscle density measurements, subject specific voxel statistical parameters and 2D and 3D voxel connectivity criteria to automatically identify the plaques. The images are optionally calibrated with external phantoms or internal reference tissue. Aortic calcium is identified automatically without manual marking. Potential false plaques from bone are automatically excluded. A 3D coordinate system provides the specific coordinates of the detected plaques, which are displayed in a plaque map for follow-up exams or ease in plaque review.
In the US2013155064A1 a method and system for automatic aortic valve calcification evaluation is disclosed. A patient-specific aortic valve model in a 3D medical image volume, such as a 3D CT volume, is used. Calcifications in a region of the 3D medical image volume are defined based on the aortic valve model. A 2D calcification plot is generated that shows locations of the segmented calcifications relative to aortic valve leaflets of the patient-specific aortic valve model. The 2D calcification plot can be used for assessing the suitability of a patient for a Transcatheter Aortic Valve Replacement (TAVI) procedure, as well as risk assessment, positioning of an aortic valve implant, and selection of a type of aortic valve implant.
In the document US 2013/155064 a method and system for automatic aortic valve calcification evaluation is described. According to US 2013/155064 a patient-specific aortic valve model in a 3D medical image volume, such as a 3D CT volume is provided. Calcifications in a region of the 3D medical image volume are defined based on the aortic valve model. A 2D calcification plot is generated that shows locations of the segmented calcifications relative to aortic valve leaflets of the patient-specific aortic valve model. It is said that the 2D calcification plot can be used for assessing the suitability of a patient for a TAVI procedure, as well as risk assessment, positioning of an aortic valve implant, and selection of a type of aortic valve implant.
The main problem in the methods known from state of art is that they are insufficiently accurate for the assessment of aortic valve calcifications and the need to use contrast in CT which is not indifferent to the patient's health.
There was a need to develop a method automatically determining the aortic valve calcium score based on non-contrast CT scans.

## SUMMARY OF THE INVENTION

Complete Aortic Root is defined as an intersection of ascending aorta with pericardial sac including but not exceeding aortic valve.

The invention provides a method to evaluate the level of calcification of the aortic valve based on established metrics, e.g. Agatston score, by utilizing a high-precision segmentation of the aortic root in non-contrast CT. The invention consists of the following steps:

> 1. Semi-automatic generation of an aortic root models in non-contrast CT scans for training an artificial neural network able to accurately localize the aortic root in newly acquired non-contrast CT scans.
> 2. Utilization of the pre-trained artificial neural network to automatically detect the aortic root in non-contrast CT scan of a human chest;
> 3. Computing the aortic valve calcium score based on high-precision segmentation of the Complete Aortic Root and one of the following techniques: assigning the voxels of Hounsfield Units (HU) above 130 a value of 1 and 0 otherwise, using an artificial neural network able to automatically classify image voxels corresponding to calcifications.

The invention provides a method for automatic calculation of the aortic valve calcium score. Unlike the state-of-the-art approaches, the method is able to precisely segment the Complete Aortic Root, including the aortic valve, based exclusively on the non-contrast CT scan. This is achieved by transferring the knowledge about anatomy acquired in contrast CT, where the geometry of the aortic root can be accurately determined. A deep artificial neural network is able to learn the anatomical model of the aortic root based on the provided training samples and use this information for segmentation in non-contrast CT where the boundaries of the aortic root are only partially visible. By fusing the information about typical anatomical shapes of aortic roots with the limited geometric information from non-contrast CT, the model is able to predict the shape and location of the Complete Aortic Root including aortic valve, which is not visible in a non-contrast CT scan. Hence, the model exceeds human capabilities when segmenting the aortic root based exclusively on the non-contrast CT and is the core component of the proposed invention. Based on high-precision segmentation of the aortic root in non-contrast CT, it can accurately identify the geometry and location of the aortic valve, which is used for identification of the aortic valve calcifications and computation of the aortic valve calcium score. The proposed invention substantially outperforms the available approaches in terms of accuracy and explainability. Below, a more detailed description of the consecutive steps of the proposed method is given.

## DETAILED DESCRIPTION OF THE EMBODIMENTS

### Aortic root segmentation model based on non-contrast CT

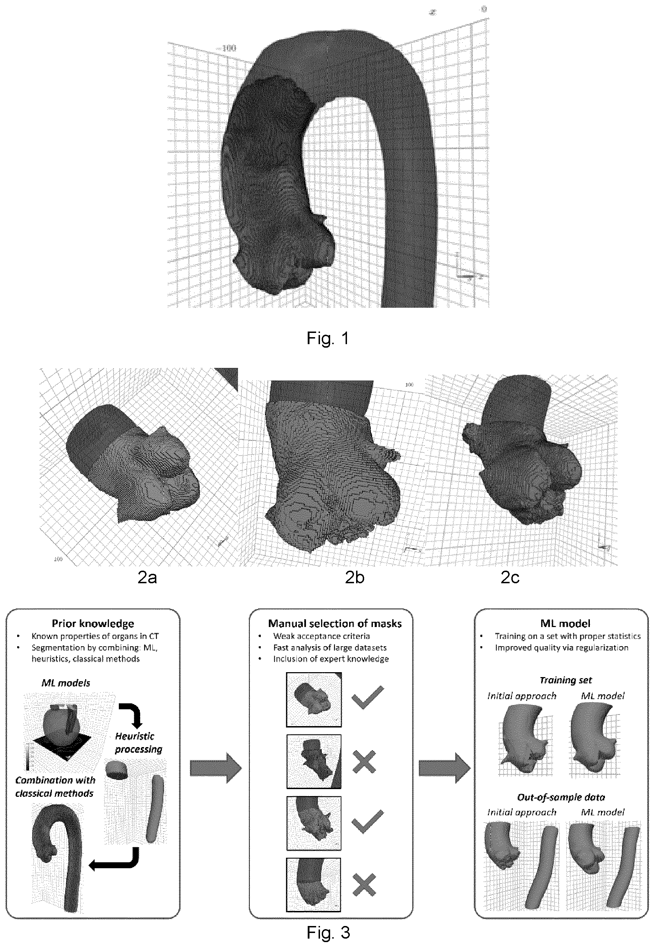

First of all, a high-precision aortic segmentation method based on non-contrast CT has to be developed. Given a set of pairs of contrast and non-contrast CT scans, this can be achieved by building first an aorta segmentation model based on contrast CT scans. It can be done in a semi-automatic fashion by applying classical, region-growth segmentation methods, especially Fast Marching (FM) or Level Set Method (LSM), where a front of an implicit function is propagated from a seed point located inside of the part of aorta within pericardium. The point can be selected manually with a minimal effort or determined automatically by using image filters able to detect circular objects in the slices of the contrast CT scan as well as relative position of the circular objects within the CT scan. In fig. 1 segmentation of the aortic root (red) based on the FM method, starting from a seed point located inside of aorta (blue), within pericardium, is shown.

Once the segmentation of the aortic root is done for a large set of CT scans, a subset of segmentations meeting predefined quality criteria is determined. This involves making a binary decision for each segmentation by a human expert and results in acceptance of rejection of each of the samples. The quality criteria do not have to be very strict and the segmentations can contain small artifacts, as shown in fig. 2a, 2b, 2c.

Finally, the accepted set of aortic root masks, together with the corresponding CT scans is used in the training process of a deep artificial neural network such as U-Net, with an extensive utilization of training set augmentation techniques known from the state of art.-The trained network should be able to much more accurately segment the aortic roots in the contrast CT scans and be free from the artifacts present in the segmentations generated using the original segmentation method thanks to the regularizing effects often observed in machine learning. The entire process is summarized in the figure 3.

In the second step, an image registration process is done to find transformations of contrast CT scans to the corresponding non-contrast CT scans such that the differences between images are minimized. The contrast CT scans transformed into the reference frame of the non-contrast CT images are used as an input for the artificial neural network trained previously to segment the aortic roots for a large group of patients. Subsequently, the quality of each segmentation is assessed by comparing the geometry and position of the aortic root with its visible parts in the non-contrast CT scan.

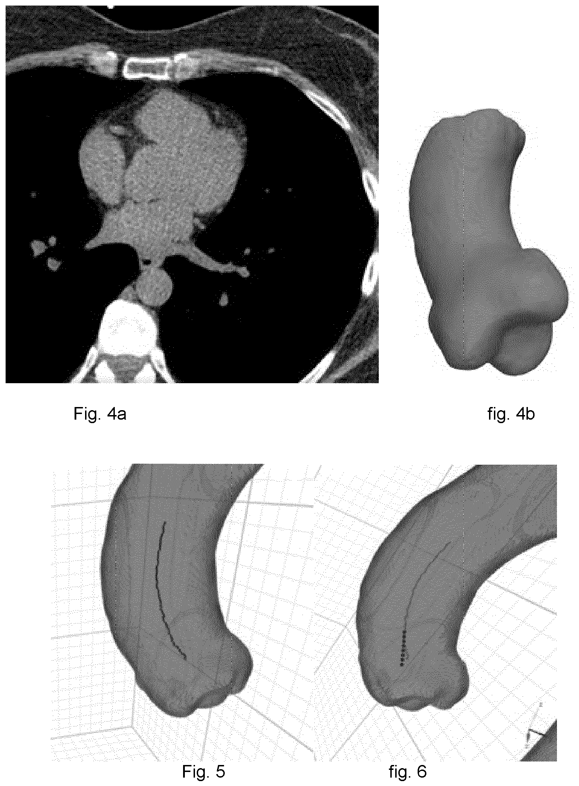

Again, a binary decision is made by a human expert to reject the samples not meeting the predefined quality criteria, but small errors are tolerated. Finally, the selected samples, being the pairs of aortic root masks and corresponding non-contrast CT scans, are used for training a deep artificial neural network, especially U-Net. According to invention training a deep artificial neural network is a standard procedure, known from the state of art. The trained model is able to provide high-precision segmentations of the aortic root based on non-contrast CT scans, as illustrated in the fig. 4a and fig. 4b. The mean distance error in locating the aortic valve is less than 1 [mm].

In the proposed approach, the registration of images is done only one time to generate a dataset for training the artificial neural network. After that step, registration is no longer used, and the network is used directly on non-contrast CT scans to segment the aortic root in the image. This is the main difference with regard to some state-of-the-art methods, which use registration process to segment the aortic root for each new patient at the time of medical testing.

Based on the quantitative evaluation of the level of accuracy of the proposed segmentation model, by following the procedure described above, a fully automatic segmentation method of aortic root based on non-contrast CT scans, which exceeds human-level segmentation accuracy, can be obtained.

**Segmentation of the aortic valve**

The high-precision segmentations of aortic roots in non-contrast CT scans are used to identify the shape and location of the aortic valves. According to the invention the process consists of the following two steps:

1. Training of a regression neural network for determining the location of the aortic valve center point based on automatically generated samples accepted preferably by a human expert or by computer program known in state of art and used in medical imaging.
2. Automatic segmentation of the aortic valve by optimizing the radius of a sphere centered at the aortic valve center point predicted by the network from step 1.

Below, both steps are described in more detail.

**Regression of the aortic valve center point**

First of all, based on a voxel mask of the aortic valve generated based on a non-contrast CT scan using the U-Net trained in the process described above, a skeleton is generated using morphological thinning. An exemplary outcome of such a process in the form of 3D visualization is illustrated in the figure 5.

In the next step, the skeleton is extrapolated by fitting a straight line to a set of points generated in the centers of the voxels belonging to the skeleton. The resulting set of extrapolated points is shown in the figure 6.

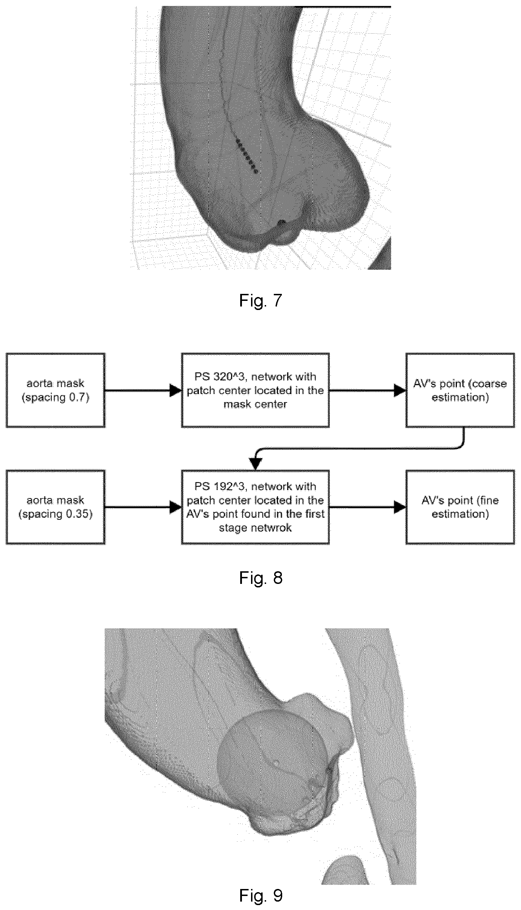

Subsequently, the extrapolated points are used to find the closest point on the outer surface of the aortic root. Alternatively, one could also look for the intersection of the straight line fitted to the aortic root's skeleton center points with the surface of the aortic root. As illustrated in the figure 7, the point found in such a process is located in a close neighborhood of the aortic valve center point.

Based on the procedure described above, a large set of aortic root geometries can be automatically processed. In order to build a robust method for identifying the aortic valve center points, according to invention, the accuracy of the automatic center point localization in the above-mentioned set of geometries is automatically or manually assessed and the samples not meeting the predefined quality criteria are rejected. The resulting set of samples can be used as an input for training an artificial neural network, e.g., Convolutional Neural Network (CNN), based on the provided aortic root masks and the corresponding aortic valve center points. To increase the accuracy of the center point localization, the estimation of its position can be done in a hierarchical manner, based on stacked CNNs working on different resolutions. An example of a hierarchy of two CNNs, used in the proposed approach, is shown in the figure 8.

To guarantee that the resulting center point is located on the outer surface of the aortic root, additionally a mapping of the predicted point onto the aortic valve is applied by finding the closest point on the surface.

The resulting multi-stage regression model, according to invention, is used in the further steps of the proposed method to automatically identify the position of the aortic valve center point based on an aortic root mask generated by the U-Net applied to a non-contrast CT scan.

**Automatic segmentation of the aortic valve**

Based on the mask of the aortic root and the predicted aortic valve center point, to ensure an accurate identification of the aortic valve calcifications, one has to segment the aortic valve itself. Again, according to invention it is made by an automatic fashion by exploiting basic geometric properties of the aortic root.

More specifically, the initially located sphere is centered at the midpoint of the aortic valve, and its radius and exact position are optimized using gradient-free optimization methods, e.g. particle swarm optimization (PSO), such that the following cost function is minimized:

$$\min_{r_d \leq r \leq r_u, b_d \leq p \leq b_u} \left[ penalty + w_1 \left( 1 - \frac{n(A \cap S(r,p))}{n(S(r,p))} \right) + w_2 \frac{n(|A \setminus S(r,p)|)}{n(A)} + w_3 \|\mathbf{p} - \mathbf{p_{aov}}\| \right]$$

where:

A - is the aorta set,
$S(r,\mathbf{p})$ is a sphere constructed based on the radius (r) and position **(p),**
$\mathbf{p_{aov}}$ is the position of the aortic valve center (from the multi-stage regression),
$w_1$, $w_2$, $w_2$ are the user-defined weights,
$r_d$, $r_u$ are lower and upper radius' bounds, respectively,
$b_d$, $b_u$ are lower and upper bounds for the sphere's position, respectively.
*penalty* is a term for enforcing the bound constraints on the sphere's radius and position, which is necessary in case of utilization of unconstrained optimization methods such as PSO. A simple yet effective approach is to use the exterior penalty method. Alternatively, for bound constraints, the penalty term could be skipped and replaced with reflection at the bounds.

Through the optimization of the cost function, a sphere if found that splits the aortic root into the aortic valve with an aortic ring and the aorta. In the figure 9 an exemplary aortic root with a sphere optimized according to the process is shown according to the invention described above.

The identified aortic valve can be used in the next step for identifying the aortic valve calcifications.

**Identification of the aortic valve calcium**

According to invention, it is proposed to identify the aortic valve calcifications by applying a filter on the non-contrast CT scan which selects only the voxels with Hounsfield Units (HU) equal to or above 130 which is medical standard, and eliminating all the groups of voxels which do not have any common voxel with the sphere found in the previous step to segment the aortic valve. This can be presented in the form of 3D visualization.

**Computation of the aortic valve calcium score**

The aortic valve calcium score is computed based on the identified aortic valve calcium according to the standard procedure proposed by Agatston or based on any alternative methodology, which is the final step in the proposed invention.

**Claims**

1. A method for calculating an aortic valve calcium score, **characterized in that** the method comprises:

   - acquiring a non-contrast CT scan of a human chest,
   - precisely identifying the shape and location of the Complete Aortic Root included in the scan by using an artificial neural network,
   - calculating aortic valve calcium score based on the identified Complete Aortic Root,

   wherein the artificial neural network is trained using a training set generated by aligning a pre-acquired image of aortic root based on contrast CT and a pre-acquired CT image without contrast enhancement.

2. The method according to claim 1, **characterized in that** the dataset for training the artificial neural network is generated using training set obtained in semi-automatic process consisting of the following steps:

   - automatic image registration where contrast CT scan including an image of an aortic root and non-contrast CT scan are aligned by an algorithm via deformation to minimize the difference between the images;
   - automatic or manual assessment of the quality of the alignment of the aortic root image based on contrast CT scan with the non-contrast CT scan;

- selection of a subset of aligned aortic root images satisfying predefined quality criteria.

3. The method according to claim 1 **characterized in that** the image of the aortic root based on contrast CT scan is automatically generated using segmentation techniques via propagation of an implicit function whose development is described by a partial differential equation dependent on the input contrast CT image.

4. The method according to claim 1, **characterized in that** the image of the aortic root in the contrast CT scan is generated by an artificial neural network trained according to process consisting of the following steps:

- automatic segmentation of the aortic root in the contrast CT scan based on segmentation techniques propagating an implicit function whose development is described by a partial differential equation dependent on the input contrast CT image;
- automatic or manual assessment of the quality of the segmentation of the aortic root image based on contrast CT scan by a human expert or by computer program;
- selection of a subset of aortic root images satisfying predefined quality criteria;
- training of an artificial neural network, especially U-Net, on the set of selected masks of aortic roots and the corresponding contrast CT scans.

5. The method according to claim 1, **characterized in that** the dataset for training the artificial neural network is generated based on a manual image registration process where an image of the aortic root based on contrast CT scan is aligned via deformation with a non-contrast CT scan by minimizing the distance between parts of the aortic root visible both in contrast and non-contrast CT scans.

6. The method according to claim 1, **characterized in that** the dataset for training the artificial neural network is generated based on automatic alignment process consisting of the following steps:

- extraction of typical aorta deformation patterns within a cardiac cycle based on a pre-acquired sequence of CT scans, expressed in a unified representation common among different patients, e.g. bounding box of the aortic root,
- automatic alignment of the aortic root image based on contrast CT scan with the non-contrast CT scan by applying typical aorta deformation patterns and minimizing the difference between the images.

7. The method according to claim 1, **characterized in that** an aortic valve is identified in the image based on the aortic root image provided by the artificial neural network in the process consisting of the following steps:

- prediction of the aortic valve center point by extrapolating the skeleton of the aortic root and finding its intersection with the outer surface of the aortic root mask or finding the nearest point on the outer surface of the aortic root mask from the extrapolated skeleton,
- placing a sphere centered at the aortic valve center point with a radius resulting in maximal ratio of the volume of the aortic root within the sphere and volume of the sphere or optimizing a different expression,
- determining the aortic valve segmentation by taking the intersection of the sphere and the surface of the aortic root mask.

8. The method according to claim 1, **characterized in that** the calcium score is computed based on segmentation of plaques contained within the aortic root using thresholding technique, which treats all voxels in the non-contrast CT scan with $HU \geq 130$ and located within a prescribed distance from the aortic valve as aortic calcium.

9. The method according to claim 1, **characterized in that** the calcium score is computed based on segmentation of plaques, wherein an aortic valve is identified in the image based on the aortic root image provided by the artificial neural network in the process consisting of the following steps:

- prediction of the aortic valve center point by extrapolating the skeleton of the aortic root and finding its intersection with the outer surface of the aortic root mask or finding the nearest point on the outer surface of the aortic root mask from the extrapolated skeleton,
- placing a sphere centered at the aortic valve center point with a radius resulting in maximal ratio of the volume of the aortic root within the sphere and volume of the sphere,
- determining the aortic valve segmentation by taking the intersection of the sphere and the surface of the aortic root mask contained within the aortic root which are classified as calcifications by a classifier, especially support vector machine, based on local image features such as image intensity of a group of voxels in a region of interest or geometric features describing the position of the plaque with regard to selected organ structures, wherein the parameters of the classifier are determined in the training process based on automatically or manually labeled data containing the information about location of aortic calcifications in the CT scan.

10. The method according to claim 1, **characterized in that** the calcium score is computed based on segmentation of plaques contained within the aortic root which are classified as calcifications by a deep artificial neural network, especially U-Net, wherein the parameters of the network are determined in the training process based on manually labeled data containing the information about location of aortic calcifications in the CT scan.

11. The method according to claim 1, **characterized in that** the image of the aortic valve in the non-contrast CT scan is generated by an artificial neural network trained according to process consisting of the following steps:

- prediction of the aortic valve center point by extrapolating the skeleton of the aortic root and finding its intersection with the outer surface of the aortic root mask or finding the nearest point on the outer surface of the aortic root mask from the extrapolated skeleton,
- placing a sphere centered at the aortic valve center point with a radius resulting in maximal ratio of the volume of the aortic root within the sphere and volume of the sphere or optimizing a different expression,
- determining the aortic valve segmentation by taking the intersection of the sphere and the surface of the aortic root mask,
- automatic or manual quality assessment of segmentation of the aortic valves by a human expert or computer program and rejection of the cases with insufficient quality,
- training an artificial neural network, especially U-Net, on the set of selected masks of aortic valves and the corresponding non-contrast CT scans.

12. The method according to claim 1, **characterized in that** the image of the aortic valve in the non-contrast CT scan is generated by an artificial neural network trained according to process consisting of the following steps:

- prediction of the aortic valve center point by extrapolating the skeleton of the aortic root and finding its intersection with the outer surface of the aortic root mask or finding the nearest point on the outer surface of the aortic root mask from the extrapolated skeleton,
- placing a sphere centered at the aortic valve center point with a radius resulting in maximal ratio of the volume of the aortic root within the sphere and volume of the sphere or optimizing a different expression,
- determining the aortic valve calcifications as the group of voxels of $HU>=130$ in the non-contrast CT scan that have a common part with the sphere found at step 2,
- automatic or manual quality assessment of segmentation of the aortic valve calcifications by a human expert or computer program and rejection of the cases with insufficient quality,
- training an artificial neural network, especially U-Net, on the set of selected masks of aortic valve calcifications and the corresponding non-contrast CT scans.

13. The method according to claim 1, **characterized in that** the image of the aortic root is identified based on a deep artificial neural network of the U-Net architecture.

14. The method according to claim 1, **characterized in that** the results of reconstruction of the aortic valve are assessed quantitatively by comparison with true geometry which is obtained from contrast series wherein the method is based on finding an alignment by a local rigid transformation of the aortic root with removed AV (contrast series) to the non-contrast image whereas the alignment uses first 1-2cm of coronary vessel visible in both series as landmarks and after this alignment the distance from true (contrast) AV and its non-contrast reconstruction can be computed and the quality of non-contrast model assessed.

Fig. 1

2a        2b        2c

**Prior knowledge**
- Known properties of organs in CT
- Segmentation by combining: ML, heuristics, classical methods

*ML models*

*Heuristic processing*

*Combination with classical methods*

**Manual selection of masks**
- Weak acceptance criteria
- Fast analysis of large datasets
- Inclusion of expert knowledge

**ML model**
- Training on a set with proper statistics
- Improved quality via regularization

*Training set*
Initial approach    ML model

*Out-of-sample data*
Initial approach    ML model

Fig. 3

Fig. 4a

fig. 4b

Fig. 5

fig. 6

Fig. 7

Fig. 8

Fig. 9

<table>
<tr><td>Europäisches Patentamt<br>European Patent Office<br>Office européen des brevets</td><td style="text-align:center">**EUROPEAN SEARCH REPORT**</td><td>**Application Number**<br><br>**EP 23 20 8457**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE JUNE-GOO ET AL: "Fully Automatic Coronary Calcium Score Software Empowered by Artificial Intelligence Technology: Validation Study Using Three CT Cohorts", KOREAN JOURNAL OF RADIOLOGY : OFFICIAL JOURNAL OF THE KOREAN RADIOLOGICAL SOCIETY, vol. 22, no. 11, 1 January 2021 (2021-01-01), page 1764, XP093150156, ISSN: 1229-6929, DOI: 10.3348/kjr.2021.0148 Retrieved from the Internet: URL:https://www.kjronline.org/Synapse/Data/PDFData/0068KJR/kjr-22-1764.pdf> [retrieved on 2024-04-19] | 1-6,13, 14 | INV.<br>G06T7/00<br>G06T7/11 |
| Y | * abstract; figures 1,2 *<br>* section Development of CAC_Auto *<br>* page 1774, second part of the left-hand column; page 1774, bottom of right-hand column * | 7-12 | |
| Y | GOSLINSKI JAROSLAW ET AL: "Deep Learning Meets Particle Swarm Optimization For Aortic Valve Calcium Scoring From Cardiac Computed Tomography", 2023 IEEE INTERNATIONAL CONFERENCE ON IMAGE PROCESSING (ICIP), IEEE, 8 October 2023 (2023-10-08), pages 3469-3473, XP034466937, DOI: 10.1109/ICIP49359.2023.10223100 [retrieved on 2023-09-11] * abstract * * section 3. EXPERIMENTAL RESULTS * | 7,9,11, 12 | TECHNICAL FIELDS SEARCHED (IPC)<br><br>G06T |
| Y,D | US 2008/279435 A1 (ARNOLD BEN A [US] ET AL) 13 November 2008 (2008-11-13) * abstract * * paragraphs [0011], [0051] * | 8-10 | |

The present search report has been drawn up for all claims

| Place of search | Date of completion of the search | Examiner |
|---|---|---|
| Munich | 26 April 2024 | Rimassa, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 20 8457

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2024

| Patent document cited in search report | Publication date | Patent family member(s) | Publication date |
|---|---|---|---|
| US 2008279435 A1 | 13-11-2008 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003176780 A1
- US 2008279435 A1
- US 2013155064 A1
- US 2013155064 A